# EUROPEAN PATENT APPLICATION

(11) **EP 2 053 678 A1**
(43) Date of publication of application: **29.04.2009**
(21) Application number: 07791976.9
(22) Date of filing: 03.08.2007
(51) Int. Cl.: H01M 8/02, H01M 8/10

(54) **TUBE-TYPE FUEL CELL**

(30) Priority: 08.08.2006 JP 2006215814
(71) Applicant: Toyota Jidosha Kabushiki Kaisha, Toyota-shi, Aichi 471-8571 (JP)
(72) Inventor: ISHIMARU, Hirokazu, Toyota-shi Aichi 471-8571 (JP); SUGIYAMA, Toru, Toyota-shi Aichi 471-8571 (JP); HAMA, Yuichiro, Toyota-shi Aichi 471-8571 (JP)
(74) Representative: Kuhnen & Wacker
(86) International application number: PCT/JP2007/065303
(87) International publication number: WO 2008/018394

(57) **Abstract**

It is an assignment to provide a fuel cell whose battery performance is high, whose gas sealing performance of fuel gas and oxidizing-agent gas can be improved by means of an opposite-end construction of a single cell 1 for fuel cell, and which can inhibit the decline of OCV.

The tube-type single cell 1 according to the present invention for fuel cell is **characterized in that**, in a tube-type single cell 1 for fuel cell, the tube-type single cell 1 being formed by putting an inside electricity collector 11, a first catalytic electrode layer 12, an electrolytic layer 13, a second catalytic electrode layer 14 and an outside electricity collector 15 coaxially in a lamination in this order from an axial center, at least the electrolytic layer 13 protrudes beyond the second catalytic electrode layer 14 and the outside electricity collector 15 in at least one of opposite ends of the single cell 1; and an outer peripheral surface 132 of the electrolytic layer 13 being protruded is exposed.

## Description

### TECHNICAL FIELD

The present invention relates to tube-type fuel cells, especially to an opposite-end construction of tube-shaped single cell that constitutes tube-type fuel cell.

### BACKGROUND ART

Recently, the consumption of energy has enlarged sharply along with the economic development of the world, and the deteriorations of environments have been concerned. Under such circumstances, as one of curing measures to the environmental problems and energy problems, the development of fuel cell has been attracting attention, fuel cell which uses an oxidizing-agent gas, such as oxygen and air, and a reducing-agent gas (fuel gas), such as hydrogen and methane, or a liquid fuel, such as methanol, as raw materials, and fuel cell which generates electricity by converting chemical energy into electric energy by means of electrochemical reaction. In particular, fuel cells whose output density is large and in addition to that whose conversion efficiency is high have come to the fore.

Single cells (unit cells) of conventional flat-plate-structured solid polymer electrolyte-type fuel cell (hereinafter, simply referred to as "fuel cell"), the minimum power-generation units, have a membrane electrode assembly (MEA: membrane electrode assembly) in which catalytic electrode layers are bonded on the opposite sides of a solid electrolytic membrane in general, and gas diffusion layers are put on the opposite sides of this membrane electrode assembly. Further, separators being equipped with gas flow passages are put on the outside of these two gas diffusion layers. Accordingly, the reactant gases (fuel gas and oxidizing-agent gas), which have flowed in the separators by way of the gas diffusion layers, are distributed to the catalytic electrode layers of the membrane electrode assembly, and additionally an electric current, which has been obtained by means electricity-generation reaction, is conducted to the outside.

However, in such a conventional flat-plate-structured fuel cell, the design factors, such as the thickness and durability of the solid electrolytic membrane, catalytic electrode layers, gas diffusion layers and separators that constitute the single cells, are limited technically. For example, in order to make an electricity-generation reaction surface area per unit volume greater, a thin solid electrolytic membrane has been demanded. Currently, the "Nafion" membrane (registered trade name: Nafion) has been used versatilely. However, in the "Nafion" membrane, the gas permeability becomes too great when the membrane thickness becomes a predetermined thickness or less. Accordingly, the fuel gas and oxidizing-agent gas become likely to leak inside the single cells, and thereby the cross-leakage (cross leak) phenomenon occurs, and consequently there are such problems as the electricity-generation voltage has dropped, and the like. That is, in the conventional flat-plate-structured fuel cell, it is difficult to improve the output density per unit volume more than currently.

As a method for solving these problems, the development of tube-type (solid-cylinder-type, hollow-cylinder-type or hollow-configured) fuel cell has been investigated. For example, it is feasible to enlarge the electricity-generation reaction area by adapting the electrolytic membrane into a tube shape with a small diameter. Moreover, by means of adapting typical fuel cell into a tube-type configuration, the separators, which have been needed in flat-plate-type fuel cell, become unnecessary, and accordingly there is such a benefit that it is likely to be structurally simplified, and so on. Further, it is possible to bundle a plurality of single cells, connect the fuel electrodes (or oxidizing-agent electrodes) of the single cells in parallel and then accommodate them in a battery case. Therefore, it is possible to connect the fuel gas and oxidizing-agent gas to the inside of case and then let it operate as a fuel cell by means of chemical reaction.

When supplying the fuel gas and oxidizing-agent gas into a battery case, one of them, the fuel gas or the oxidizing-agent gas, comes to flow through the axial central portion of single cell, and the other one of them comes to flow through the outside of single cell. That is, first and second catalytic electrode layers are formed on the opposite sides of an electrolytic layer, respectively, and then the fuel gas and oxidizing-agent gas come to flow to the first and second catalytic electrode layers, respectively. Accordingly, within the battery case for accommodating the single cells, it is needed to dispose a separator wall so that the fuel gas and oxidizing-agent gas do not mix.

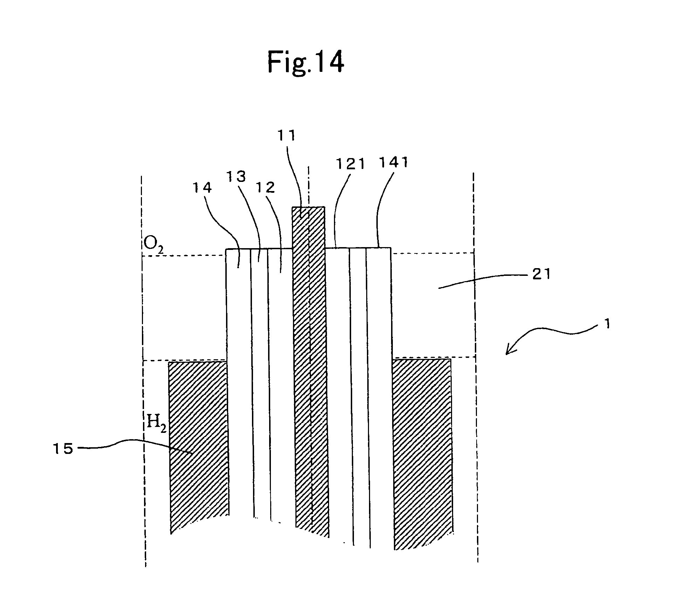

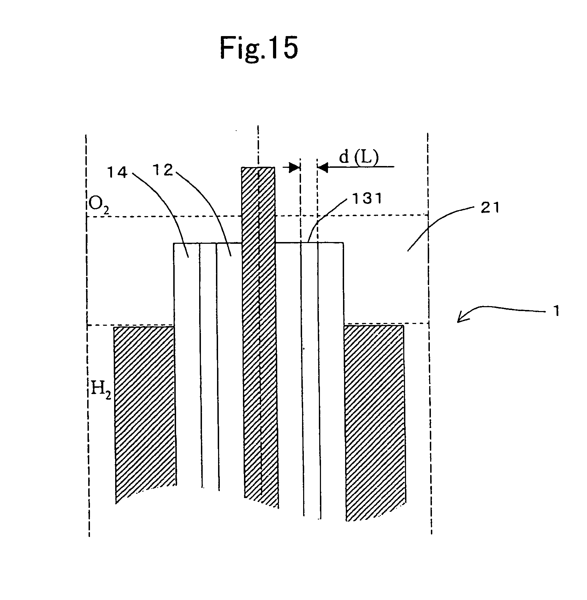

In general, at the opposite ends of single cell, the separator wall is formed by means of interposing a potting member by bonding it between the battery case and an end surface of the electrolytic layer, which separates the first and second catalytic electrodes. The flow passages for the fuel gas, which flows to the first catalytic electrode layer (or second catalytic electrode layer), and the oxidizing-agent gas, which flows to the second catalytic electrode layer (or first catalytic electrode layer), are divided by means of this separator wall, and thereby a fuel-gas chamber and an oxidizing-agent-gas chamber are formed inside the battery case. Fig. 14 or Fig. 15 illustrates an internal construction of fuel cell in which a separator wall is put into place. As shown in Fig. 14 and Fig. 15, a separator wall is disposed at the opposite end of single cell, and thereby the internal space of the battery case is divided into an oxidizing-agent-gas chamber and a fuel-gas chamber.

As for a method of putting a separator wall into place, a method of disposing a separator wall by bonding a potting member between an outer peripheral surface of the outside electricity collector of single cell and an inner wall of the battery case, as illustrated in Fig. 14, has been investigated. However, since the separator wall is disposed by bonding it onto an outer peripheral surface of the outside electricity collector, it is not connected with the electrolytic layer directly. Accordingly, the opposite ends (end surfaces) of the first catalytic electrode layer and second catalytic electrode layer through which each of the oxidizing-agent gas and fuel gas flows are exposed to an atmosphere of the same oxidizing-agent gas (or fuel gas), the efficiency of electricity-generation reaction declines by means of gaseous mixing at the opposite ends (end surfaces) of the catalytic electrode layers.

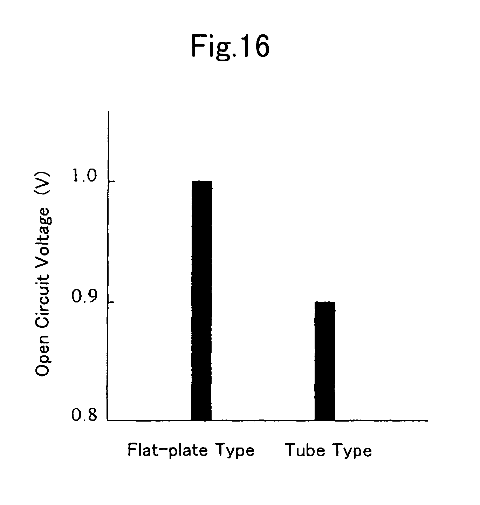

Moreover, as illustrate in Fig. 15, a method of embedding an opposite end of single cell as a whole by means of a potting member has been also investigated. Compared with the method shown in Fig. 14, the gaseous mixing at the opposite ends of the catalytic electrode layers is reduced in the method shown in Fig. 15. However, compared with flat-plate-type fuel cells, the gas sealing performance by means of the potting member in this method is still insufficient, and thereby this becomes a factor that results in the decline of open circuit voltage (OCV). Fig. 16 compares OCVs of flat-plate-type fuel cell and tube-type fuel cell. As can be seen from Fig. 16, the OCV of flat-plate-type fuel cell is 1.0 V, whereas the OCV of conventional tube-type fuel cell has declined by 0.1 V to become 0.9V approximately.

### DISCLOSURE OF THE INVENTION

### Assignment to be Solved by the Invention

In the method of putting the separator wall (potting member) into place as illustrated in Fig. 15, although the gas sealing performance has been improved to a certain extent, there still exist the following fuel-cell performance problems: a Nafion membrane constituting the electrolytic layer is thin; a bondable width (membrane thickness) of an end surface of the Nafion membrane is small when bonding it with the potting member; the gaseous mixing is still likely to occur by means of actions, such as the pressures of the reactant gases being present on the opposite sides of the electrolytic layer, or the molecular diffusion of them; and the open circuit voltage (OCV) declines. Further, since the catalytic electrode layers adhere to the opposite sides of the electrolytic layer that possesses an extremely thin membrane thickness, it is difficult to bond the potting member onto an end surface of the electrolytic layer selectively when putting a separator wall into place. As a consequence, the possibility that the potting member enters the catalytic electrode layers accidentally becomes high when forming a separator wall. Accordingly, gaseous choking resulting from the potting member becomes likely to occur at the catalytic electrode layers, and consequently there is such a problem that it has given adverse affects to the performance of fuel cell.

The present invention is one which has been done in view of the aforementioned circumstances, and it is an assignment to provide a fuel cell whose battery performance is high, whose gas sealing performance of fuel gas and oxidizing-agent gas can be improved by means of an opposite-end construction of fuel-cell single cell, and which can inhibit the decline of OCV.

### Means for Solving the Assignment

A tube-type single cell for fuel cell according to the present invention is characterized in that, in a tube-type single cell for fuel cell, the tube-type single cell being formed by putting an inside electricity collector, a first catalytic electrode layer, an electrolytic layer, a second catalytic electrode layer and an outside electricity collector coaxially in a lamination in this order from an axial center, at least the electrolytic layer protrudes beyond the second catalytic electrode layer and the outside electricity collector in at least one of opposite ends of the single cell; and an outer peripheral surface of the electrolytic layer being protruded is exposed. Thus, since the electrolytic layer protrudes beyond the second catalytic electrode layer and outside electricity collector in the one of the opposite ends of the single cell, it is possible to bond a potting member directly onto the electrolytic layer when forming a separator wall by means of the potting member. That is, since an outer peripheral surface of the protruding electrolytic layer is exposed, it becomes easy to bond the potting member directly onto an outer peripheral surface of the electrolytic layer' s protruding part selectively. Further, since it is possible to freely adjust a length of the protruding part, namely an area of the protruding part's outer peripheral surface, it is possible to set an enough bonding area and bonding width to the potting member, bonding area and bonding width which determine gas sealing performance, at will. Hence, it is possible to secure higher gas sealing performance than those of conventional methods.

Moreover, it is preferable that, at the opposite end of the tube-type single cell for fuel cell according to the present invention, the electrolytic layer can protrude beyond the first catalytic electrode layer to cover an outer peripheral surface of the inside electricity collector; and additionally the opposite end can comprise an electrolytic-layer leading-end portion for covering an opposite end of the first catalytic electrode layer. Thus, an end surface of the first catalytic electrode layer is surrounded by means of the electrolytic-layer leading-end portion. Accordingly, it is possible to keep the potting member from entering the first catalytic electrode layer accidentally when bonding the potting member onto the electrolytic layer at the opposite end of the single cell.

It is preferable that the opposite end of the single sell for fuel cell according to the present invention can protrude as a truncated cone configuration in which the axial center makes its center line; and a part of the electrolytic layer can be exposed as at least a portion of a side peripheral surface of the truncated cone configuration. Thus, at the opposite end of the single cell, an end surface of the electrolytic layer is exposed in the side peripheral surface of the truncated cone configuration in which the axial center makes its center line. That is, by means of forming the opposite end of the single cell as a truncated cone configuration, the electrolytic layer with a small membrane thickness is exposed along the side peripheral surface of the truncated cone configuration, thereby being turned into an inclined-plane construction. Specifically, the single cell possesses an opposite-end structure that has a greater electrolytic-layer exposed end-surface area than the membrane thickness of the electrolytic layer. Therefore, it becomes easy to bond a potting member directly onto the electrolytic layer's protruding part selectively. Further, when adjusting a gradient of the side peripheral surface (inclined plane) freely, it is possible to freely adjust an end-surface area of the electrolytic layer that is exposed in the side peripheral surface of the truncated cone configuration. Accordingly, it is possible to set a sufficient bonding area and bonding width to the potting member, bonding area and bonding width which determine gas sealing performance, at will. Hence, it is possible to secure higher gas sealing performance than those of conventional methods.

A process according to the present invention for manufacturing a tube-type single cell for fuel cell is characterized in that, in a process for manufacturing a tube-type single cell for fuel cell, the tube-type single cell being formed by putting an inside electricity collector, a first catalytic electrode layer, an electrolytic layer, a second catalytic electrode layer and an outside electricity collector coaxially in a lamination in this order from an axial center; it comprises: a first-catalytic-electrode-layer forming step of forming the first catalytic electrode layer coaxially from an axial predetermined starting-point position on the inside electricity collector in a direction toward another opposite end; an electrolytic-layer forming step of forming the electrolytic layer coaxially from a predetermined position, which is adjacent to the starting-point position of the first catalytic electrode layer, in the direction toward another opposite end; and a second-catalytic-electrode-layer and outside-electricity-collector forming step of forming the second catalytic electrode layer and the outside electricity collector sequentially in the direction toward another opposite end coaxially from a position, which is separated away from the predetermined position of the electrolytic layer by a predetermined interval in the direction toward another opposite end. Thus, at the opposite end of the single sell, an outer peripheral surface of the electrolytic layer is exposed from the predetermined position to an end surface of the second catalytic electrolytic layer. An area of the electrolytic layer' s exposed surface is adjusted by means of setting the predetermined position, and thereby it is possible to secure a sufficient electrolytic-layer exposed area that bonds with a potting member.

A process according to the present invention for manufacturing a tube-type single cell for fuel cell is characterized in that, in a process for manufacturing a tube-type single cell for fuel cell, the tube-type single cell being formed by putting an inside electricity collector, a first catalytic electrode layer, an electrolytic layer, a second catalytic electrode layer and an outside electricity collector coaxially in a lamination in this order from an axial center, it comprises: a membrane-electrode-assembly forming step, the membrane-electrode-assembly forming step comprising: a first-catalytic-electrode-layer forming step; an electrolytic-layer forming step; and a second-catalytic-electrode-layer forming step; wherein the first catalytic electrode layer, the electrolytic layer, and the second catalytic electrode layer are formed sequentially on an outer peripheral surface of the inside electricity collector, respectively; and a second-electrolytic-layer partially-removing step of removing a part of the second catalytic electrode layer, which covers the electrolytic layer at one of opposite ends of the single cell at least. Thus, in the membrane electrode assembly, the second catalytic electrode layer is removed partially by means of the second-electrode-layer partially-removing step. That is, it is possible to expose the electrolytic layer, which has been covered with the second catalytic electrode layer. Hence, it is possible to secure a sufficient electrolytic-layer exposed area, which bonds with a potting member, easily. For example, by means of using a laser beam while appropriately adjusting the irradiation intensity and irradiation rate of laser adequately, and then irradiating the second electrode catalytic layer with it while controlling them to such an extent that the second catalytic electrode layer can be removed, it is possible to remove the second catalytic electrode layer alone without ever touching the electrolytic layer.

Moreover, it is preferable that the second-catalytic-electrode-layer partially-removing step of the process according to the present invention for manufacturing a tube-type single cell for fuel cell can be adapted into a truncated-cone-configuration processing step of processing the opposite end into a truncated cone configuration in which the axial center makes its center line, thereby exposing at least a portion of a side peripheral surface of the obtained truncated cone configuration as the electrolytic layer. For example, by means of irradiating the opposite end of the single cell with a laser beam that possesses a predetermined incident angle with respect to the axial center of the single cell, and then forming the opposite end of the single as a truncated cone configuration, it is possible to expose a part of the electrolytic layer in a side peripheral surface of the truncated cone configuration. Hence, it is possible to form an electrolytic-layer exposed surface (end surface) that is greater than the electrolytic layer's membrane thickness. In addition, since it is possible to adjust an area of a side peripheral surface of the formed truncated cone configuration by adjusting the laser beam's incident angle, it is possible to secure a sufficient area for an end surface of the exposed electrolytic layer. Hence, it is possible to bond it with a potting member with ease.

### Effect of the Invention

In accordance with the tube-type fuel cell according to the present invention for fuel cell, since the electrolytic layer protrudes beyond the second catalytic electrode layer and outside electricity collector at an opposite end of the single cell, it is possible to bond a potting member with the electrolytic layer directly when forming a separator wall by means of the potting member. That is, since an outer peripheral surface of the protruding electrolytic layer is exposed, it becomes easy to directly bond the potting member selectively onto an outer peripheral surface of the protruding part of the electrolytic layer. Further, since it is possible to freely adjust a length of the protruding part, namely, an area of an outer peripheral surface of the protruding part, it is possible to set an enough bonding area and bonding width to the potting member, bonding area and bonding width which determine gas sealing performance, at will. Hence, it is possible to secure higher gas sealing performance than those of conventional methods.

### BRIEF DESCRIPTION OF THE DRAWINGS

Fig. 1 is a conceptual diagram of a tube-type fuel cell, which is directed to a present embodiment;
Fig. 2 is a vertical cross-sectional diagram of the tube-type fuel cell, which is directed to the present embodiment;
Fig. 3 is a vertical cross-sectional diagram of a tube-type single cell for fuel cell according to a first embodiment;
Fig. 4 is a vertical cross-sectional diagram of a tube-type single cell for fuel cell according to a modified mode of the first embodiment;
Fig. 5 is a schematic diagram of a manufacturing apparatus for manufacturing the tube-type single cell for fuel cell according to the first embodiment;
Fig. 6 is a flowchart diagram for illustrating the manufacturing steps of the tube-type single cell for fuel cell according to the first embodiment;
Fig. 7 is a flowchart diagram for illustrating the electrolytic-layer forming step of the tube-type single cell for fuel cell according to the first embodiment;
Fig. 8 is a comparison diagram between the open circuit voltage in the tube-type single cell for fuel cell according to the present embodiment and that in a conventional product;
Fig. 9 is a vertical cross-sectional diagram of a tube-type single cell for fuel cell according to a second embodiment;
Fig. 10 illustrates a forming method for an opposite end of the tube-type single cell for fuel cell according to the second embodiment;
Fig. 11 illustrates a potting method at the opposite end of the tube-type single cell for fuel cell according to the second embodiment;
Fig. 12 is a plan view of a cap, which is directed to the tube-type single cell for fuel cell according to the second embodiment;
Fig. 13 is an I-I cross-sectional diagram of the cap, which is directed to the tube-type single cell for fuel cell according to the second embodiment;
Fig. 14 illustrates a potting method at an opposite end of a single cell for conventional tube-type fuel cell;
Fig. 15 illustrates another potting method at an opposite end of a single cell for conventional tube-type fuel cell; and
Fig. 16 is a comparison diagram between the open circuit voltage in a conventional tube-type fuel cell and that in a flat-plate-type fuel cell.

### Explanation on Reference Numerals

1: Single Cell;
2: Battery Case;
21: Potting Member (Separator Wall);
201: Fuel-gas Feeding-in Port;
202: Oxidizing-agent-gas Feeding-in Port;
203: Exhaust Port;
221: Oxygen-gas Chamber;
222: Hydrogen-gas Chamber;
11: Inside Electricity Collector;
12: First Catalytic Electrode Layer;
13: Electrolytic Layer;
14: Second Electrolytic Layer;
15: Outside Electrolytic Layer;
131: Electrolytic-layer End Surface;
132: Electrolytic-layer Outer Peripheral Surface;
H: Step;
130: Electrolytic-layer Leading-end Portion;
121: First-catalytic-layer End Surface;
141: Second-catalytic-layer End Surface;
111: Inside-electricity-collector End Surface;
112: Inside-electricity-collector Outer Peripheral Surface;
S1: Molding-die S1 Sensor;
S3: Control Means;
S11: Solution Flow-in Passage for Coating;
S12: Valve;
d: Electrolytic-layer Membrane Thickness;
L: Electrolytic-layer Exposed End-surface Width;
S: Truncated Cone Configuration Side Peripheral Surface;
1211: First-catalytic-electrode-layer End Surface;
1311: Electrolytic-layer End Surface;
1411: Second-catalytic-electrode-layer End Surface;
A: Angle between Side Peripheral Surface of Truncated Cone Configuration and axis (Laser-beam Incident Angle, or Processing Angle);
H1: Depth of Exposed Inside Electricity Collector;
H2: Axial Distance (Length) of Exposed MEA;
R: Rotary Direction;
X: Single-cell Axis (Direction, or Axial Center);
Y: Laser-beam Irradiation Axis;
C: Cap;
C10: Hole;
C11: Cylindrical Portion;
C12: Inverted Truncated-cone-configured Portion;
H3: Cap Distance (Depth); and
C101: Cap End Surface

### Best Mode for Carrying Out the Invention

Hereinafter, while referring to the drawings, a single cell will be explained, single cell which is manufactured by means of a process for manufacturing a tube-type single cell according to embodiments of the present invention for fuel cell.

### (First Embodiment)

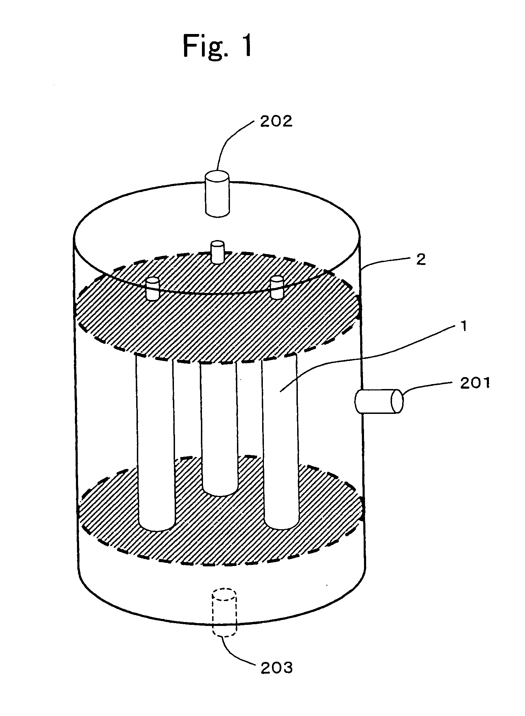

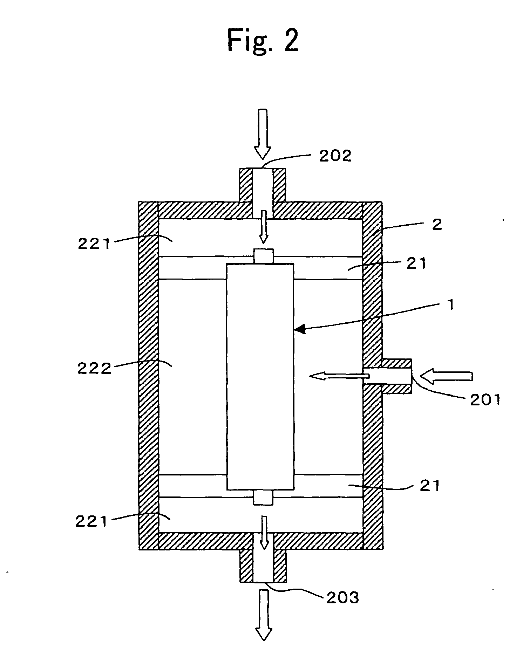

An outline construction of a fuel cell, which includes tube-type single cells according to the present embodiment, is shown in Fig. 1 and Fig. 2. As illustrated in Fig. 1, the fuel cell, which includes the tube-type single cells according to the present embodiment, comprises the tube-type single cells 1 (hereinafter, referred to as "single cells" 1), and a battery case 2. A plurality of the single cells 1 are connected in parallel, and are bundled and are then accommodated in the battery case 2. The battery case 2 is equipped with a fuel-gas feeding-in port 201 for feeding a fuel gas in, an oxidizing-agent feeding-in port 202 for feeding an oxidizing-agent gas in, and an exhaust port 203. Moreover, the single cells 1 are connected in parallel, thereby conducting an electric current to the outside by way of an electric conductor (not shown).

Note that the single cells 1 according to the present embodiment are formed as a tube shape; although their transverse cross section is circular, it is possible to turn it into configurations other than a circle, such as eclipses or squares, for instance.

In the fuel cell comprising the single cells 1 according to the present embodiment, as for the fuel gas, it is possible to employ a gas, such as hydrogen gas and methane, mainly, or a liquid like methanol depending on certain cases. As for the oxidizing-agent gas, it is possible to employ a gas, such as oxygen gas and air, mainly.

Moreover, as illustrated in Fig. 2, the single cells 1 according to the present embodiment are fixed within the battery case 2 by way of potting members 21. By means of disposing the potting members 21 in the battery case 2, the internal space of the battery case 2 is divided into an oxygen-gas chamber 221 and a hydrogen-gas chamber 222, thereby being formed as a portion of oxygen-gas flow passage and hydrogen-gas flow passage.

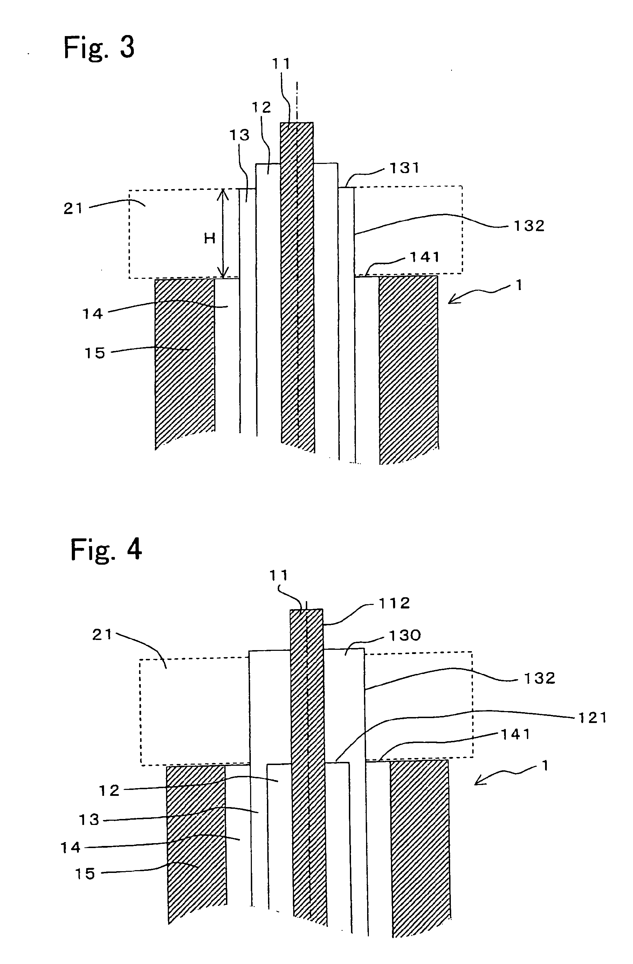

Next, the structure of the single cell 1 according to the present invention will be explained by means of Fig. 3. As shown in Fig. 3, the single cell 1 is formed by putting an inside electricity collector 11, a first catalytic electrode layer 12, an electrolytic layer 13, a second catalytic electrode layer 14, and an outside electricity collector 15 coaxially in a lamination in this order from an axial center. Note that a membrane electrode assembly (MEA) is constituted of the first catalytic electrode layer 12, the electrolytic layer 13, and the second catalytic electrode layer 14.

The inside electricity collector 11 is constituted of a columnar supporting member, and continuous pores are formed inside so that gases can pass through. Accordingly, air (oxygen gas) is transferred by way of the inside electricity collector 11 that is positioned at the central portion of the single cell 1, and is then provided to the first catalytic electrode layer (fuel electrode). Moreover, the columnar supporting member constituting the inside electricity collector 11 is equipped with electric connectivity, and can thereby convey electricity to the outside.

Note that, in the present embodiment, as for the inside electricity collector 11, although it is not limited in particular as far as it is a material being of highly electrical conductivity for passing electrons therethrough at the time of electricity generation in the membrane electrode assembly MEA, it can preferably be an electrically conductive porous material, such as powdery sintered bodies, fibrous sintered bodies and fibrous foamed bodies, as raw-material supply passages for raw-material gases, and the like, so that raw materials are likely to diffuse therein. As for the highly electrical conductive material, it is possible to name the following, for instance: porous bodies being made of materials that exhibit electric conductivity, such as metals like gold, platinum, and so forth, carbon, and those in which the surface of titanium or carbon is coated with metals like gold, platinum, and so on; or it is possible to name those which are cylinder-shaped hollow bodies being made of them and whose wall surface is provided with holes by means of punching, and the like. Among them, it is preferable to be a porous carbon material from the viewpoints of electric conductivity, raw-material diffusibility, corrosion resistance, and so forth. When the inside electricity collector 11 is a hollow body, a membrane thickness can fall in a range of 0.5 mm-10 mm, preferably 1 mm-3 mm, for instance. When the inside electricity collector 11 is a solid body, a membrane thickness can fall in a range of 0.5 mm-10 mm, preferably 1 mm-3 mm, for instance.

Moreover, a pore diameter of the pores that are provided by means of punching, and the like, in a wall surface of the inside electricity collector 11 can usually fall in a range of 0.01 mm-1 mm.

In the present embodiment, although the inside electricity collector 11 is employed as a cylindrical supporting body, it is not limited to this: for example, instead of the inside electricity collector 11, it is possible to use a supporting body that is formed as a cylindrical shape, or the like, which is made of a rod, a wire, or the like, that is made from resin being of good mold releasability, such as Teflon (trademark). In this case, it is possible to remove a membrane electrode assembly MEA from the supporting body after forming the membrane electrode assembly MEA. Note that, as for the cylindrical supporting body, it is allowable to be a cylindrical shape: although it is allowable to be any configurations such as cylindrical shapes, polygonal cylindrical shapes like triangular cylinders, quadrangular cylinders, pentagonal cylinders, hexagonal cylinders, and so on, and elliptic cylindrical shapes, for instance; it can usually be a cylindrical shape. Moreover, in the present description, the "cylindrical shape" includes hollow bodies and solid bodies unless being explained especially.

As for the first catalytic electrode layer 12 (air electrode) of the single cell 1 according to the present embodiment, it can be those in which a catalyst, such as carbon with platinum (Pt) or the like being loaded thereon, is dispersed in a resin, such as a solid polymer electrolyte like Nafion (trademark), and is then formed as a film, for instance. A membrane thickness of the first catalytic electrode layer 12 can fall in a range of 1 µm-100 µm, preferably 1 µm-20 µm, for instance.

As for the electrolytic layer 13 of the single cell 1 according to the present embodiment, it is not limited in particular as far as it is a material being of high ionic conductivity to proton (H⁺) and oxygen ion (O²⁻): for example, although it is possible to name solid polymer electrolytic membranes, stabilized zirconia membranes, and the like, a solid polymer electrolytic membrane, such as a perfluorosulfonic acid system, can be used preferably. Specifically, it is possible to employ a perfluorosulfonic acid-system solid polymer electrolytic membrane, such as Goreselect (trademark) of JAPAN GORETEX Co., Ltd., Nafion (trademark) of Du Pont Corporation, Aciplex (trademark) of ASAHIKASEI Co. , Ltd. , or Flemion (trademark) of ASAHI GLASS Co., Ltd. A membrane thickness of the electrolytic membrane 13 can fall in a range of 10 µm-200 µm, preferably 30 µm-50 µ m, for instance.

As for the second catalytic electrode layer 14 (fuel electrode) of the single cell 1 according to the present embodiment, it can be those in which a catalyst, such as carbon with platinum (Pt) or the like being loaded thereon along with another metal like ruthenium (Ru), is dispersed in a resin, such as a solid polymer electrolyte like Nafion, and is then formed as a film. A membrane thickness of the second catalytic electrode layer 14 can fall in a range of 1 µm-100 µm, preferably 1 µm-20 µm, for instance.

The outside electricity collector 15 of the single cell 1 according to the present embodiment comprises a member which exhibits through-hole property and electric connectivity, and additionally which is capable of deforming elastically. Specifically, the outside electricity collector 15 is constituted of a strip-shaped member (product name: Cellmet, SUMITOMO ELECTRIC) whose material quality is SUS (stainless steel). Note that the outside electricity collector 15 is not limited to this, but it is possible to constitute it using a member that is good in terms of through-hole property and electric connectivity, and that is capable of deforming elastically. Moreover, the outside electricity collector 15 is formed by winding a strip-shaped member, whose material quality is SUS, around the second catalytic electrode layer 14 with a predetermined oblique angle on the outer peripheral surface of the second catalytic electrode layer 14, which is positioned at the radially outermost surface of the first catalytic electrode layer 12, electrolytic layer 13 and second catalytic electric layer 14 that are laminated by means of coating on the inside electricity collector 11. Thus, it is possible to let it function as a battery by connecting the inside electricity collector 11 and outside electricity collector 15 to an external circuit electrically and then operating it while supplying rawmaterials to the first catalytic electrode layer 12 and second catalytic electrode layer 14 respectively.

Next, the structure of an opposite end of the single cell 1, a feature of the present invention, will be explained.

As illustrated in Fig. 3, at one of the opposite ends of the single cell 1, the electrolytic layer 13 protrudes beyond the second catalytic electrode layer 14 and outside electricity collector 15, and a step "H" with a predetermined distance is disposed between an end surface 131 of the electrolytic layer 13 and an end surface 141 of the second catalytic electrode layer 14. Moreover, an outer peripheral surface 132 of the protruding electrolytic layer 13 is exposed. Thus, the potting member 21, which is formed by means of a later-described separator-wall forming step, becomes feasible to be bonded directly onto the outer peripheral surface 132 of the protruding electrolytic layer 13. That is, at the opposite end of the single cell 1, since the electrolytic layer 13 protrudes beyond the second catalytic electrode layer 14 and outside electricity collector 15, and since the outer peripheral surface 132 of the protruding part is exposed, it is possible to bond the potting member 21 directly onto the electrolytic layer 13 selectively when forming a separator wall using the potting member 21. Further, since it is possible to freely adjust a length of the protruding part, that is, an area of the outer peripheral surface 132 of the protruding part, it is possible to freely design a bonding area and bonding width "H" to the potting member 21, bonding area and bonding width "H" which determine gas sealing performance. Hence, compared with the conventional methods, the installation of the potting member 21 becomes easier, and it is possible to exhibit high gas sealing performance.

Moreover, as a modified example of the present embodiment, at one of the opposite ends of the single cell 1, the electrolytic layer 13 protrudes beyond the first catalytic electrode layer 12 so that it forms an electrolytic-layer leading-end portion 130 that covers an end surface 121 of the first catalytic electrode layer 12, as illustrated in Fig. 4. That is, in the electrolytic-layer leading-end portion 130 of the electrolytic layer 13 of the single cell 1, its outer peripheral surface 132 is exposed, and additionally the electrolytic-layer leading-end portion 130 contacts with an outer peripheral surface 112 of the inside electricity collector 11 so as to surround an end surface 121 of the first catalytic electrode layer 12. Hence, the first catalytic electrode layer 12 is surrounded by the electrolytic layer 13, and the inside electricity collector 11. Accordingly, when bonding the potting member 21 onto the outer peripheral surface 132 of the electrolytic layer 13, it is possible to keep the potting member 21 from entering the first electrolytic layer 12 accidentally.

Next, a process for manufacturing the single cell 1 according to the present embodiment will be explained.

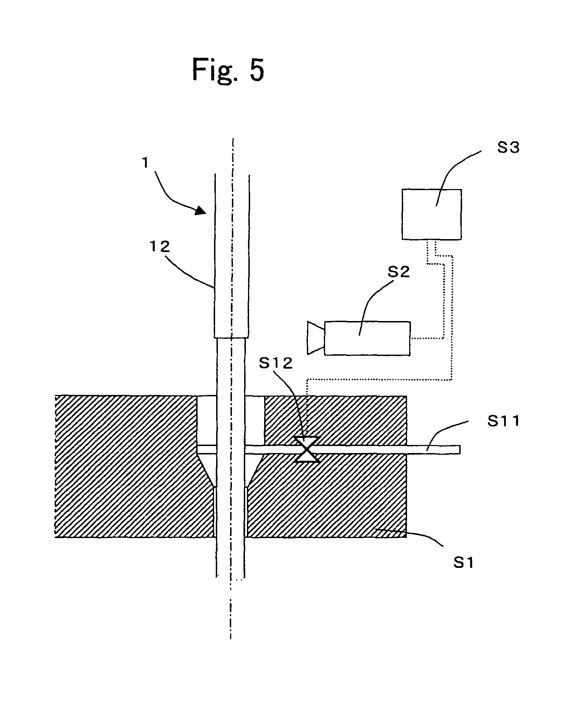

A process for manufacturing the single cell 1 according to the present embodiment comprises a first-catalytic-electrode-layer forming step of putting the inside electricity collector 11, the first catalytic electrode layer 12, the electrolytic layer 13, the second catalytic electrode layer 14 and the outside electricity collector 15 coaxially in a lamination in this order from an axial center, thereby forming the first catalytic electrode layer 12 coaxially from an axial predetermined starting-point position on the inside electricity collector 11 in a direction toward another opposite end; an electrolytic-layer forming step of forming the electrolytic layer 13 coaxially from a predetermined position, which is adjacent to the starting-point position of the first catalytic electrode layer 12, in the direction toward another opposite end; and a second-catalytic-electrode-layer and outside-electricity-collector forming step of forming the second catalytic electrode layer 14 and the outside electricity collector 15 sequentially in the direction toward another opposite end coaxially from a position, which is separated away from the predetermined position of the electrolytic layer by a predetermined interval in the direction toward another opposite end. Note that a single-cell processing apparatus that is directed to the manufacture of the single cell 1 is illustrated in Fig. 5. As shown in Fig. 5, the single-cell processing apparatus is constituted of a single-cell molding die S1; a flow-in passage S11 for solution for coating; a valve S12 for opening and closing the passage S11; a sensor S2 for collecting image information on the single cell 1; and a controller S3.

The single cell 1 is inserted into the single-cell molding die S1, and the single cell 1 is recognized by means of the sensor S2. Note that the sensor S2 can be constituted of a CCD camera, or the like. Based on image-signal information from the sensor 2, the controller S3 using image processing technology controls the valve S12, and lets a solution for coating flow in into the single-cell molding die S1 through the coating-solution flow-in passage S11, thereby coming to coat the single cell 1. Thus, the by means of the image recognition by the sensor S2, and by means of the opening and closing of the valve S12, it is possible to coat a necessary part on the outer periphery of the single cell 1 by means of the coating solution. Note that, in the present embodiment, the sensor 2 employs FU-10 produced by KEYENCE. The valve S12 employs V40 produced by UNICONTROLS.

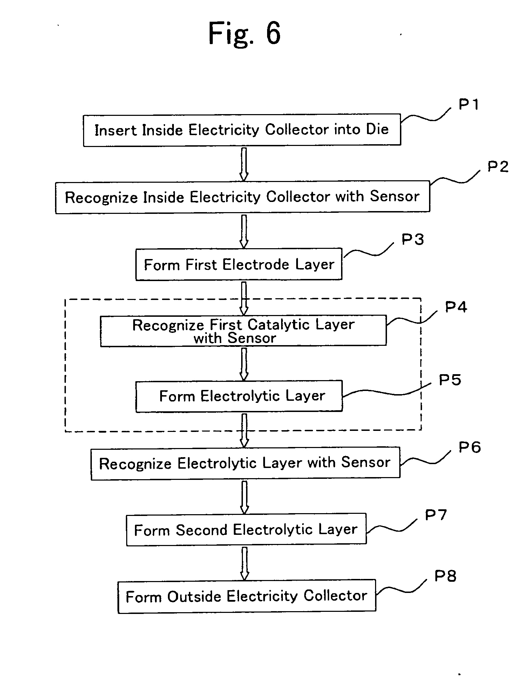

Hereinafter, the process for manufacturing the single cell 1 will be explained while referring to flowcharts. Fig. 6 is a flowchart that is directed to the process for manufacturing the single cell 1. As illustrated in Fig. 6, the cylindrical inside electricity collector 11 constituting the single cell 1 is inserted into the single-cell molding die S1 (P1), and the inside electricity collector 11 is recognized by means of the sensor S2 (P2). Based on image information from the sensor S2, the opening and closing of the valve S12 are controlled by means of the controller S3, and a first catalytic solution for forming the first catalytic electrode layer is flowed in into the single-cell molding die S1 through the passage S11. The first catalytic electrode layer 12 is formed coaxially from an axially predetermined starting-point position on the inside electricity collector 11 in the direction toward another opposite end (P3). And, the formed first catalytic electrode layer 11 is recognized by means of the sensor S2 (P4), and image information on the first catalytic electrode layer 12 being output by the sensor S2 is processed by the controller S3, and then the electrolytic layer 13 is formed coaxially from a predetermined position (position, which is adjacent to the starting-point position of the first catalytic electrode layer) in the direction toward another opposite end (P5). Next, the formed electrolytic layer 13 is recognized by means of the sensor S2 (P6), and the second catalytic electrode layer 14 is formed coaxially from a position, which is separated away from the starting point of the electrolytic layer 13 by a predetermined interval (the step H shown in Fig. 3), in the direction toward another opposite end (P7). Finally, the outside electricity collector 15 is formed on an outer periphery of the second catalytic electrode layer 14 (P8).

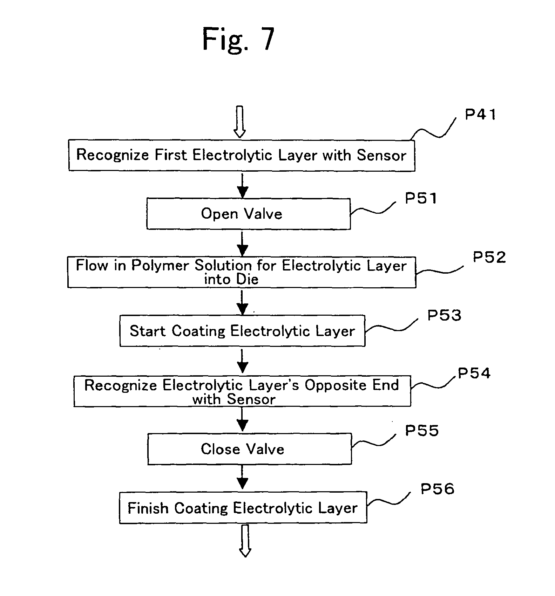

Moreover, a specific step for forming the electrolytic layer 13 will be explained using Fig. 7. As shown in Fig. 7, the first catalytic electrode layer 12 is formed on an outer periphery of the inside electricity collector 11, and the formed first catalytic electrode layer 12 is recognized at the sensor S2 (P41). After image information on the first catalytic electrode layer 12 being collected by means of the sensor S2 undergoes image processing at the controller S3, a necessary section from a predetermined position on the outer peripheral surface of the single cell 1 is inserted into the single-cell molding die S11, and then the valve S12 is opened up following an instruction of the controller S3 (P51). When the valve S12 is opened up, a polymer solution for electrolytic layer, polymer solution which is for forming the electrolytic layer 13, is flowed in into the single-cell molding die S11. And, the formation of the electrolytic layer 13 commences (P53). Image information on the electrolytic layer 13, which is formed by means of coating, is collected at the sensor S2, and then the forming circumstances of the electrolytic layer 13 are recognized (P54). At a point of time at which the fact that the electrolytic layer 13 has been formed on the necessary part, the valve S12 is closed following an instruction of the controller S3 (P55), and then the formation of the electrolytic layer 13 terminates (P56).

Thus, since the image processing is carried out using the sensor S2 and controller S3 when forming the single cell 1, the positions for coating, the number of times for coating, and the like, are controlled. In particular, it is possible to accurately form the outer peripheral surface 132 in which the electrolytic layer 13 is exposed. Moreover, since it is possible to do coating onto necessary sections, it is possible to get it done by employing materials in small amounts, and accordingly it is advantageous for cost reduction.

In the present embodiment, in order to mold the single cell 1; in light of the viscosity and concentration of the coating solutions, it is necessary to do application (coating) two times for forming the first catalytic electrode layer 12, and the second catalytic electrode layer 14; and it is necessary to do application ten times for forming the electrolytic layer 13. Moreover, the molding rate is 1 m/min. Note that, as for the polymer solution for electrolytic layer, DE2020 produced by DUPONT is employed; and, as for solutions for first and second catalytic electrode layers, mixture liquids of DE2020 and catalytic solutions are employed.

When forming the first catalytic electrode layer 12, a first layer (first-time coating) is applied with a predetermined interval (10 mm) and length (100 mm). And, a second layer (second-time coating) is applied. When summing the first layer and the second layer up, the membrane thickness of the first catalytic electrode layer 12 becomes 20 µm. As for the electrolytic layer 13, the molding is carried out as shown in Fig. 7. The molding of the electrolytic layer 13 is carried out while altering the opening and closing of the valve S12 so that it becomes longer than the end surface 121 of the first catalytic electrode layer 12 by 5 mm (H) at an opposite end of the single cell 1. The application is repeated up to ten times, and thereby the membrane thickness of the electrolytic layer 13 becomes 50 µm. And, when forming the second catalytic electrode layer 14, the control system is altered once again, and then the application is carried out twice in the same manner as the formation conditions for the first catalytic electrode layer 12. The membrane thickness of the second catalytic electrode layer 14 becomes 20 µ m. Finally, when it is cut to a predetermined length (120 mm), it becomes a structure as illustrated in Fig. 4.

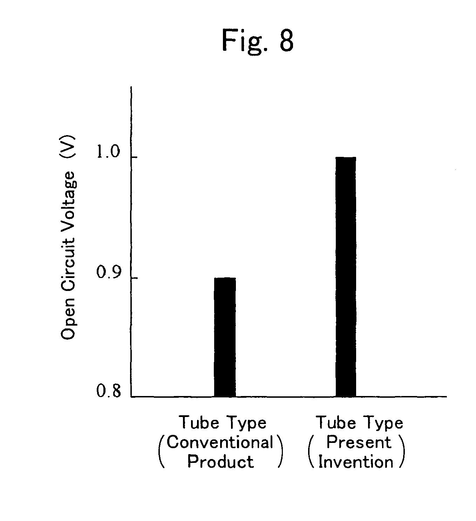

The single cell 1 according to the present embodiment was accommodated in the battery case 2, and a sealing treatment was carried out by dipping, thereby turning it into a fuel cell; and then a measurement of battery performance was carried out. The evaluation result is illustrated in Fig. 8. As can be seen from Fig. 8, compared with the open circuit voltage (OCV, about 0.9 V) of a conventional tube-type fuel cell, it possessed a high OCV (about 1.0 V). When making a comparison in Fig. 16, it is also understood that it possessed an OCV (about1.0 V) at the same level as that of a flat-plate-type fuel cell.

### (Second Embodiment)

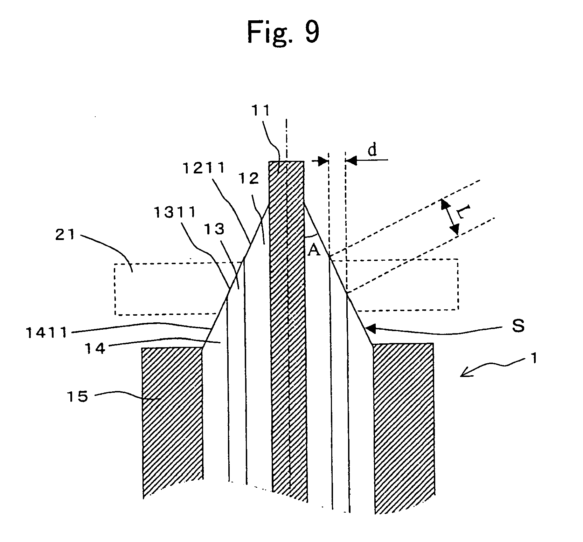

An example of a second embodiment is illustrated in Fig. 9. The example of the second embodiment has the same constructions as those of the example of the first embodiment basically. Parts that accomplish the same functions will be designated with common reference numerals. Hereinafter, it will be explained while centering on different sections.

First of all, an opposite end of a single cell according to the present embodiment will be explained. As illustrate in Fig. 9, the single cell 1 according to the present embodiment is formed mainly by putting an inside electricity collector 11, a first catalytic electrode layer 12, an electrolytic layer 13, a second catalytic electrode layer 14, and an outside electricity collector 15 coaxially in a lamination in this order from an axial center. At one of the opposite ends of the single cell 1, an end surface 1211 of the first catalytic electrode layer 12, an end surface 1311 of the electrolytic layer 13, and an end surface 1411 of the second catalytic electrode layer 14 are exposed as a side peripheral surface "S" with a truncated cone configuration in which the axial center makes the central line. When an angle "A" between the side peripheral surface "S" and the axial center is less than 90 degrees, an exposed width "L" of the electrolytic-layer end surface 1311 that is exposed in the side peripheral surface "S" with the truncated cone configuration becomes greater than a membrane width "d" of the electrolytic layer 13. That is, it is possible to make the exposed width "L" of the electrolytic-layer end surface 1311 greater by means of making the angle "A" smaller. Therefore, since it is possible to form the exposed end surface 1311 of the electrolytic layer 13 greater, a potting member 21 becomes likely to bond onto the electrolytic layer 13 selectively when the potting member 21 is bonded by means of bonding. Moreover, since it is possible to adjust the angle "A," it is possible to provide a sufficient area for a bonding surface (1311) to the potting member 21, and thereby the gas sealing performance of fuel cell is improved.

Thus, by means of exposing the end surface 1311 of the electrolytic layer 13 along the side peripheral surface "S" with a truncated cone configuration that possesses a predetermined angle "A" with respect to the axial center, it is possible to have the electrolytic-layer end surface 1311 (width "L") that is greater than the membrane-thickness width "d." Therefore, it becomes easy to directly bond the potting member 21 selectively onto the outer peripheral surface 1311, the protruding part of the electrolytic layer 13. Further, when adjusting the angle "A" freely, it is possible to freely adjust the area of the end surface 1311 of the electrolytic layer 13 that is exposed in the side peripheral surface "S" with the truncated cone configuration. Accordingly, it is possible to set the bonding area and bonding width to the potting member 21, bonding area and bonding width which determine the gas sealing performance, at will. Consequently, it is possible to exhibit higher gas sealing performance than conventional methods do.

Next, a process for manufacturing the single cell 1 according to the present embodiment will be explained.

The process for manufacturing the single cell 1 according to the present embodiment comprises a first-catalytic-electrode-layer forming step of forming the inside electricity collector 11, the first catalytic electrode layer 12, the electrolytic layer 13, the second catalytic electrode layer 14 and the outside electricity collector 15 by means of putting them coaxially in a lamination in this order from an axial center, thereby forming the first catalytic electrode layer 12; an electrolytic-layer forming step of forming the electrolytic layer 13 coaxially; and a second-catalytic-electrode-layer and outside-electricity-collector forming step of forming the second catalytic electrode layer 14, and the outside electricity collector 15 sequentially; and then a second-catalytic-electrode-layer partially-removing step of removing a part of the second catalytic electrode layer 14, which covers the electrolytic layer 13 at one of the opposite ends of the single cell 1.

Note that, in the present embodiment, the second-catalytic-electrode-layer partially-removing step is a truncated-cone-configuration, processing step of processing a part of the electrolytic layer 13 at the opposite end of the single cell 1 into a truncated cone configuration in which the axial center makes its center line, thereby exposing a portion of the side peripheral surface "S" with the obtained truncated cone configuration as the end surface 1311 of the electrolytic layer 13.

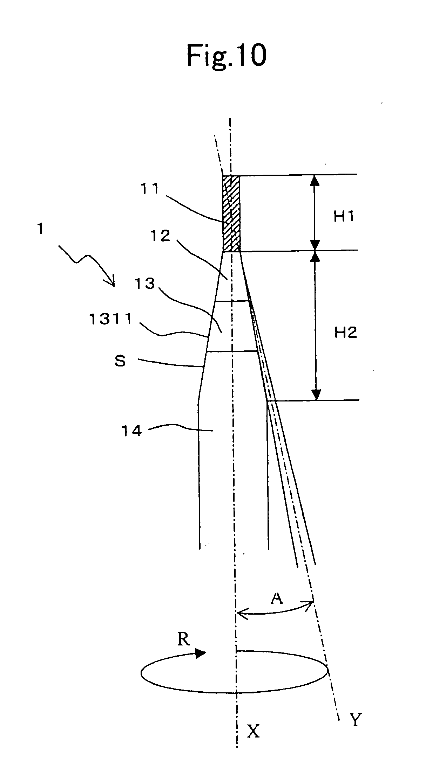

Hereinafter, the processing step of processing the opposite end of the single cell 1 as a truncated cone configuration will be explained in detail. Fig. 10 illustrates a processing method for the opposite end of the single cell 1. As shown in Fig. 10, with respect to the cylindrical single cell 1 that is formed by laminating the inside electricity collector 11, the first catalytic electrode layer 12, the electrolytic layer 13 and the second catalytic electrode layer 14 in this order from the axial center, the opposite end of the single cell 1 is processed using a laser beam that possesses an incident angle "A" to the axial center "X." Note that, in the example of the present embodiment, a CO₂ laser (ML80R-CP7A) produced by MITSUBISHI ELECTRIC is employed. The output of the laser beam is 5 W, the incident angle "A" is 0.4 degrees, and the irradiation time is 1 s. Meanwhile, the single cell 1 is supported by a rotatable fixing means, is processed by means of irradiating it with the laser beam. Note that the rotating speed of the fixing means is 30 rpm (in the rotation direction "R"). Thus, the opposite end of the single cell 1 is stripped by means of cutting it obliquely, and thereby a truncated cone configuration is formed. Moreover, since the intensity of the laser beam being employed in the present embodiment is adjustable, the inside electricity collector 11 is not stripped by means of adjusting it to such an extent that the MEA, which is constituted of the first catalytic electrode layer 12, the electrolytic layer 13 and the second catalytic electrode layer 14, can be stripped. Thus, the opposite end of the single cell 1 is formed as a truncated cone configuration, and thereby at least the end surface 1311 of the electrolytic layer 13 is exposed in the side peripheral surface "S" with the truncated cone configuration. The width "L" of the exposed end surface 1311 of the electrolytic layer 13 can be formed greater than the membrane width "d" of the electrolytic layer 13. Accordingly, it is possible to bond the potting member 22 directly onto the electrolytic layer 13. Consequently, it is possible to improve the gas sealing performance, and thereby it is possible to suppress the degradation of OCV.

Moreover,bysettingtheincident position andincidentangle "A" of the laser beam in advance, the exposed position and exposed width of MEA, i.e., those of the single cell 1, can be determined. To be more precise, the exposed length "H1" of the inside electricity collector 12 (a distance from the end surface of the inside electricity collector 12 to a position at which the first catalytic electrode layer 12 is exposed) is 5 mm, and a length "H2, " which the end surface of MEA, i.e., that of the single cell 1, exhibits in the axially central direction, is 10 mm. And, after the opposite end of the single cell 1 has been formed as the truncated cone configuration, the outside electricity collector 15 is formed on the outer peripheral surface of the second catalytic electrode layer 14.

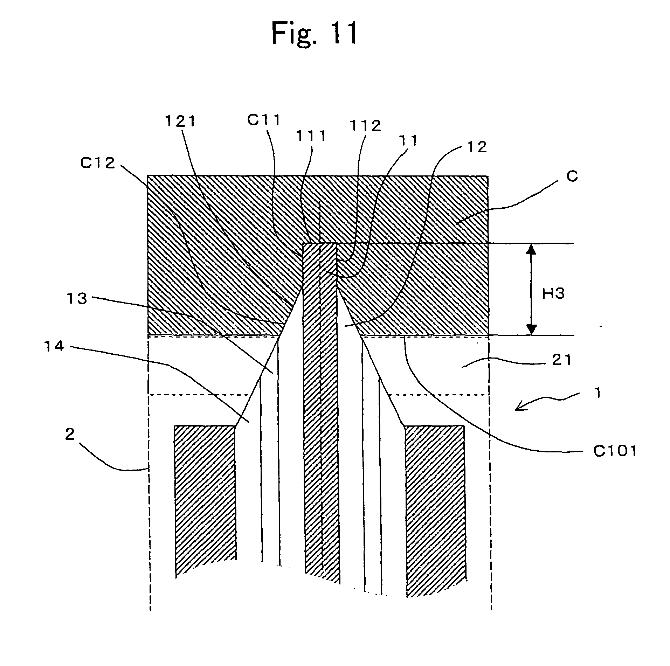

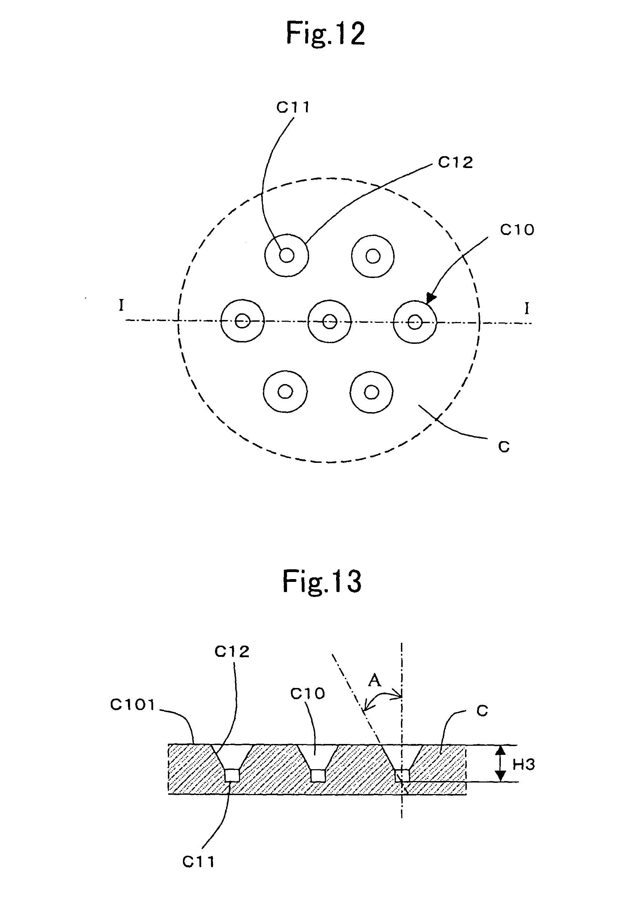

Next, gas sealing (potting) is carried out onto the single cell 1 by means of a potting member 21 in a battery case 2. Fig. 11 illustrates an installation method of the potting member 21. Note that the potting member 21 being employed in the present embodiment is "KONISHI BOND" (MOS7). As shown in Fig. 11, a cap "C" is attached to an opening at the opposite ends of the battery case 2, and the caps "C" are installed so as to seal the openings at the opposite ends of the battery case 2 using an O ring, and the like. Fig. 12 is one which illustrates a front view of the cap "C." Fig. 13 is one which illustrates the I-I vertical cross-sectional view of the cap "C." As shown in Fig. 12, or in Fig. 13, in the upper part of the cap "C," holes "C10" are formed at predetermined positions. Moreover, the holes "C10" are equipped with an inverted truncated-cone-configured portion "C12" and a cylindrical portion "C11" that are formed coaxially. An angle "A" is maintained between the side peripheral surface of the inverted truncated-cone-configured portion "C12" and the axis. Moreover, as can be seen from Fig. 11, an opposite end of the single cell 1 is inserted into one of the holes "C10." An opposite end of the inside electricity collector 11 is inserted into it up to the cylindrical portion "C13," and the first catalytic electrode layer 12 is inserted into it up to the inverted truncated-cone-configured portion "C12" of the cap "C." That is, it is made so that the end surface 121 of the first catalytic electrode layer 12 contacts with the side peripheral surface of the inverted truncated-cone-configured portion "C12." Thus, a portion of the opposite end of the single cell 1 fits into one of the holes "C10" that are formed in the cap "C." The disposition of the single cell 1 is determined by means of the positions of the holes "C10." The holes "C10" of the cap "C" can cap (cover) a predetermined length "H3" from the opposite end of the single cell 1. Note that, in the present embodiment, "H3" is 8 mm. Thus, the single cell 1 is accommodated inside the battery case 2, and further the caps "C" are installed to the openings. A predetermined amount of a "KONISHI BOND" solution, which constitutes the potting member 21, is injected into the battery case 2, and then the battery case 2, which accommodates the single cells 1 therein, is rotated about the central portion of the single cells 1 in the axial direction "X" that is adapted into the center of rotation, and thereby the "KONISHI BOND" solution within the battery case 2 is subjected to the action of centrifugal force and is then cured in such a state that it contacts with (adheres to) the end surface "C101" of the caps "C" (ordinary-temperature solidification, 24 hours). And, the caps "C" are removed after the potting members 21 have been cured, and thereby the gas sealing of the single cell 1 by means of the potting members 12 completes.

Note that, in order that the potting member 21 does not go into the caps "C," a resinous raw material (LDPE) is employed for the caps "C." Moreover, since the inside diameter of the battery case 2 is constant, the potting region of the potting members 21 (the thickness of potting layers) can be adjusted by means of the usage amount of the "KONISHI BOND" solution for forming the potting members 21. That is, using a predetermined usage amount of the "KONISHI BOND" solution, the potting members 21 are bonded onto the end surface 11 of the electrolytic layer 13 that is exposed in the opposite ends of the single cell 1, and thereby it is possible to carry out potting.

Moreover, by means of employing the caps "C," the potting members 21 can be formed at the opposite ends of the single cell 1 easily, and additionally it becomes less like to get mixed in with the first catalytic electrode layer 12 accidentally, and thereby it is possible to avoid the gaseous clogging resulting from the accidental mingling of potting member.

The single cell 1 according to the second embodiment was potted into the battery case 2; as a result of measuring the OCV, it is understood that it exhibited higher OCV than that of conventional tube-type fuel cell in the same manner as the example of the first embodiment did, as shown in Fig. 8.

### INDUSTRIAL APPLICABILITY

The tube-type single cell according to the present invention for fuel cell, and a process for manufacturing the same can be employed in tube-type fuel cell, and can be utilized in industries, for example, in the fields of automobile industries, and the like, or can be utilized also as an energy source for household applications, and so forth.

## Claims

1. A tube-type single cell for fuel cell, the tube-type single cell being formed by putting an inside electricity collector, a first catalytic electrode layer, an electrolytic layer, a second catalytic electrode layer and an outside electricity collector coaxially in a lamination in this order from an axial center;
the tube-type single cell for fuel cell being **characterized in that** at least said electrolytic layer protrudes beyond said second catalytic electrode layer and said outside electricity collector in at least one of opposite ends of said single cell; and an outer peripheral surface of said electrolytic layer being protruded is exposed.

2. The tube-type single cell for fuel cell according to claim 1, wherein: said electrolytic layer protrudes beyond said first catalytic electrode layer to cover an outer peripheral surface of said inside electricity collector at said opposite end; and additionally said opposite end comprises an electrolytic-layer leading-end portion for covering an opposite end of said first catalytic electrode layer.

3. The tube-type single cell for fuel cell according to claim 1, wherein: said opposite end protrudes as a truncated cone configuration in which said axial center makes its center line; and a part of said electrolytic layer is exposed as at least a portion of a side peripheral surface of the truncated cone configuration.

4. A process for manufacturing a tube-type single cell for fuel cell, the tube-type single cell being formed by putting an inside electricity collector, a first catalytic electrode layer, an electrolytic layer, a second catalytic electrode layer and an outside electricity collector coaxially in a lamination in this order from an axial center;
the process for manufacturing the tube-type single cell for fuel cell being **characterized in that** it comprises:
a first-catalytic-electrode-layer forming step of forming said first catalytic electrode layer coaxially from an axial predetermined starting-point position on said inside electricity collector in a direction toward another opposite end;
an electrolytic-layer forming step of forming said electrolytic layer coaxially from a predetermined position, which is adjacent to said starting-point position of said first catalytic electrode layer, in said direction toward another opposite end; and
a second-catalytic-electrode-layer and outside-electricity-collector forming step of forming said second catalytic electrode layer and said outside electricity collector sequentially in said direction toward another opposite end coaxially from a position, which is separated away from said predetermined position of said electrolytic layer by a predetermined interval in said direction toward another opposite end.

5. A process for manufacturing a tube-type single cell for fuel cell, the tube-type single cell being formed by putting an inside electricity collector, a first catalytic electrode layer, an electrolytic layer, a second catalytic electrode layer and an outside electricity collector coaxially in a lamination in this order from an axial center;
the process for manufacturing the tube-type single cell for fuel cell being **characterized in that** it comprises:
a membrane-electrode-assembly forming step, the membrane-electrode-assembly forming step comprising: a first-catalytic-electrode-layer forming step; an electrolytic-layer forming step; and a second-catalytic-electrode-layer forming step; wherein said first catalytic electrode layer, said electrolytic layer, and said second catalytic electrode layer are formed sequentially on an outer peripheral surface of said inside electricity collector, respectively; and
a second-electrolytic-layer partially-removing step of removing a part of said second catalytic electrode layer, which covers said electrolytic layer at one of opposite ends of said single cell at least.

6. The process for manufacturing the tube-type single cell for fuel cell according to claim 5, wherein said second-catalytic-electrode-layer partially-removing step is a truncated-cone-configuration processing step of processing said opposite end into a truncated cone configuration in which said axial center makes its center line, thereby exposing at least a portion of a side peripheral surface of the obtained truncated cone configuration as the electrolytic layer.
